(19) Europäisches Patentamt
European Patent Office
Office européen des brevets

(11) Numéro de publication: **0 035 082 B1**

(12) **FASCICULE DE BREVET EUROPEEN**

(45) Date de publication du fascicule du brevet: **14.03.84**

(51) Int. Cl.$^3$: **C 04 B 35/49**, H 01 B 3/12

(21) Numéro de dépôt: **80401897.6**

(22) Date de dépôt: **31.12.80**

(54) **Matériau diélectrique stable en température utilisable en très haute fréquence, et son procédé de fabrication.**

(30) Priorité: **29.02.80 FR 8004601**

(43) Date de publication de la demande: **09.09.81 Bulletin 81/36**

(45) Mention de la délivrance du brevet: **14.03.84 Bulletin 84/11**

(84) Etats contractants désignés: **AT BE CH DE GB IT LI LU NL SE**

(56) Documents cités:
**DE - A - 2 264 260**
**DE - A - 2 634 145**
**DE - A - 2 634 146**
**FR - A - 1 418 388**

(73) Titulaire: **THOMSON-CSF, 173, Boulevard Haussmann, F-75379 Paris Cedex 08 (FR)**

(72) Inventeur: **Mage, Jean-Claude, Thomson-CSF SCPI 173, Bld Haussmann, F-75360 Paris Cedex 08 (FR)**
Inventeur: **Deljurie, Claude, Thomson-CSF SCPI 173, Bld Haussmann, F-75360 Paris Cedex 08 (FR)**

(74) Mandataire: **Wang, Pierre et al, THOMSON-CSF SCPI 173, Bld Haussmann, F-75379 Paris Cedex 08 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 035 082 B1

BUNDESDRUCKEREI BERLIN

**Matériau diélectrique stable en température utilisable en très haute fréquence, et son procédé de fabrication**

L'invention concerne un matériau diélectrique stable en température et présentant une grande constante diélectrique et de très faibles pertes, qui le rendent convenable pour fabriquer des résonateurs diélectriques fonctionnant à des fréquences supérieures à 1 gigahertz, notamment des filtres et des oscillateurs.

On sait, notamment grâce aux travaux de Richtmeyer, publiés en 1939 dans le Journal de Physique appliquée (Journal of Applied Physics, vol. 10, N° 6, page 391, article initulé »Dielectric Resonators«) qu'un volume occupé par un diélectrique solide peut se comporter en très haute fréquence comme une cavité résonnante. La longueur d'onde des oscillations électro-magnétiques est d'autant plus réduite, que la constante diélectrique du milieu est plus grande.

On connaît, d'autre part, des matériaux du diagramme $TiO_2$, $ZrO_2$, $SnO_2$, ZnO, ayant les propriétés suivantes:

- constante diélectrique relative comprise entre 30 et 40;
- tangente de l'angle de pertes diélectriques comprise entre $2 \cdot 10^{-4}$ et $4 \cdot 10^{-4}$;
- coefficient de température de la constante diélectrique situé entre $-10 \cdot 10^{-6}/°C$ et $+50 \cdot 10^{-6}/°C$.

Il est connu également, d'après le brevet allemand 2 634 145, que l'introduction d'oxyde de lanthane $La_2O_3$ dans des compositions à base d'oxydes de titane $TiO_2$, d'étain $SnO_2$ et de zirconium $ZrO_2$ améliore le facteur de mérite de ces compositions. La quantité d'oxyde de lanthane introduite dans ces compositions doit être relativement faible pour avoir une action efficace (moins de 10% en poids).

Le brevet français portant le numéro national 1 418 388 enseigne que l'adjonction d'une faible quantité d'oxyde de nickel NiO à une composition à base d'oxydes de titane, d'étain et de zirconium permet d'obtenir une meilleure agglomération de la céramique.

On a également décrit la réalisation de tels résonateurs, stables en température, à l'aide de matériaux mentionnés ci-dessus.

Toutefois, les pertes diélectriques sont d'autant plus élevées que la fréquence est plus grande, notamment de 2 à 100 GHz. On peut définir un critère de qualité en formant le produit $Q \cdot f$ dans lequel f est la fréquence en gigahertz et Q est défini par la relation:

$$Q = \frac{1}{tg\,\delta}$$

où tg $\delta$ est la tangente de l'angle de pertes.

Le produit $Q \cdot f$, pour une fréquence de 8 GHz, est de l'ordre de 30 à 40 térahertz pour les matériaux tables en température.

Les enseignements tirés des documents cités plus haut permettent d'améliorer sensiblement les qualités physiques et électriques de ces matériaux. Cependant, les développements de la technique des dispositifs tels que les résonateurs diélectriques exigent des matériaux présentant à la fois un produit $Q \cdot f$ élevé pour la plus faible dérive thermique possible. Il est également important que le procédé de fabrication de ces matériaux conduise à une excellente reproductibilité de leurs propriétés électriques.

L'invention vise à améliorer le critère de qualité, en augmentant le produit $Q \cdot f$ dans la bande de 2 à 100 GHz sans compromettre la stabilité en température.

L'invention a donc pour objet un matériau diélectrique, du type obtenu suivant la technologie de fabrication de la céramique, comportant au moins une étape de frittage en atmosphère oxydante de matières premières préalablement broyées, lesdites matières premières comprenant des constituants principaux qui sont l'oxyde de titane $TiO_2$, l'oxyde d'étain $SnO_2$ et l'oxyde de zirconium $ZrO_2$ et comprenant également des ajouts dont l'oxyde de lanthane $La_2O_3$; caractérisé en ce que lesdits ajouts comprennent également de l'oxyde de nickel NiO et du fer, les proportions molaires desdites matières premières étant les suivantes:

t $TiO_2$, x $SnO_2$, y $ZrO_2$, a NiO, b $La_2O_3$, c Fe

avec:

$0{,}9 \leq t \leq 1{,}1$
$0{,}1 \leq x \leq 0{,}4$
$0{,}6 \leq y \leq 0{,}9$
$0{,}015 \leq a \leq 0{,}06$
$0{,}01 \leq b \leq 0{,}1$
c de l'ordre de 0,0035:

et en ce que l'atmosphère oxydante est de l'oxygène pur.

L'invention a aussi pour objet un procédé de fabrication d'un matériau diélectrique, caractérisé en ce qu'il comporte au moins une étape de broyage des matières premières et une étape de frittage à une température de 1400° C à 1500° C.

Les matériaux les plus stables en température sont obtenus pour:

$0{,}99 \leq t \leq 1{,}01$
$0{,}30 \leq x \leq 0{,}38$
$0{,}60 \leq y \leq 0{,}70$
$0{,}015 \leq a \leq 0{,}06$
$0{,}01 \leq b \leq 0{,}1$
$c = 0{,}0035$

L'invention sera mieux comprise au moyen de la description qui suit, et des dessins qui l'accompagnent, parmi lesquels:

— la figure 1, est un graphique illustrant l'influence de la composition sur les paramètres de fonctionnement d'un résonateur diélectrique réalisé en un matériau diélectrique;

— la figure 2 est un graphique montrant l'évolution du critère de qualité d'un matériau selon l'invention en fonction de la quantité d'oxyde de fer qu'il contient;

— la figrue 3 est une courbe de fréquence de résonance en fonction de la température.

Sur le graphique de la figure 1, on a porté en abscisses le pourcentage molaire d'oxyde d'étain par rapport au nombre de moles d'oxyde de titane. Sur une première échelle d'ordonnées on a porté un paramètre $\tau_f$ défini plus loin exprimant la dérive du premier ordre en température, de la fréquence de résonance du matériau, pour chaque composition d'abscisse x. En effet le développement en série, limité aux deux premiers termes, de la dérive relative de la fréquence de résonance f est le suivant:

$$\frac{f - f_0}{f_0} = 1 + A(T - T_0) + B(T - T_0)^2 \qquad (1)$$

où $f_0$ est la fréquence de résonance à la température $T_0$ de 25° C.

Le paramètre porté en ordonnées est en fait:

$$\tau_f = 10^6 \cdot A .$$

Sur une deuxième échelle d'ordonnées on a porté le critère de qualité Qxf dans lequel Qf est exprimé en térahertz ($10^{12}$ Hz).

La fréquence de mesure étant de 8 GHz, les paramètres x, a, b et c étant ceux qui ont été qui ont été définis à propos de la composition du matériau, on a, pour le graphique de la figure 1:

$0{,}1 \leq x \leq 0{,}4$
$a = 0{,}03$
$b = 0{,}015$
$c = 0$
$t = 1$

On note que le paramètre $\tau_f$ s'annule pour deux valeurs de x, l'une au voisinage de 0,20, l'autre au voisinage de 0,35 (le coefficient B de la relation (1) demeurant de l'ordre de $-0{,}05 \cdot 10^{-6}$/° C). On note cependant que le critère de qualité est très nettement meilleur pour $x = 0{,}35$ que pour $x = 0{,}20$.

Lorsque la fréquence du résonateur est différente de 8 GHz on obtient des courbes analogues. Toutefois on constate, pour des résonateurs de dimensions adaptées à des fréquences de résonance différentes, dans le même mode, les différences suivantes:

20% pour un résonateur à 2 GHu;
± 10% de fluctuation de 8 à 100 GHz.

Le procédé de fabrication du matériau selon l'invention comporte les étapes suivantes, analogues à celles de la production de matériaux céramique:

a) mélange des matières premières préalablement pesées, sauf en ce qui concerne le fer à provenir éventuellement de l'utilisation de billes d'acier à l'étape suivante;
b) premier boyage en milieu aqueux ou alcoolique, à l'aide de billes de zircone ou d'acier. A titre d'exemple, pour introduire du fer, on peut utiliser pour 100 grammes de matières premières, 10 000 billes d'acier de 3 mm de diamètre, dans une cuve en porcelaine contenant un demi-litre d'alcool éthylique. La durée du broyage est de 20 minutes, pour obtenir de l'ordre de 0,003 mole de fer pour une mole d'oxyde de titane;

c) chamottage, sous oxygène pur, en 6 heures, à une température de 1150°C à 1250°C, et de préférence à 1200°C; dans le cas du broyage avec billes d'acier on peut sans inconvénient supprimer cette étape;
d) deuxième broyage, effectué en soumettant la chamotte au même traitement qu'à l'étape (b); étape supprimée dans le cas où l'étape (c) est elle-même supprimée;
e) frittage sous oxygène pur, en six heures, a une température de 1400°C à 1500°C, et de préférence à 1450°C.

## Exemples

Les exemples 1 à 4 (tableau 1) se rapportent à des compositions initiales pour lesquelles x est voisin de 0,35; les exemples 5 à 10 (tableau 2) se rapportent au cas où x est voisin de 0,20.

Tableau 1

(d est la densité du matériau fritté)

| N° | x | y | t | a | b | c | $\tau_f$ | Q · f (THz) | d |
|---|---|---|---|---|---|---|---|---|---|
| 1 | 0,35 | 0,65 | 1 | 0,03 | 0,015 | 0 | −12 | 56 | 5,21 |
| 2 | 0,37 | 0,63 | 1 | 0,03 | 0,015 | 0 | +21 | 38 | 5,09 |
| 3 | 0,325 | 0,642 | 1,003 | 0,03 | 0,015 | 0,0035 | +3 | 49 | 5,19 |
| 4 | 0,325 | 0,644 | 1,005 | 0,03 | 0,015 | 0,0035 | 0 | 50 | 5,21 |

Tableau 2

| N° | x | y | t | a | b | c | $\tau_f$ | Q · f (THz) | d |
|---|---|---|---|---|---|---|---|---|---|
| 5 | 0,25 | 0,75 | 1 | 0,03 | 0,015 | 0,0035 | 0 | 46 | 5,26 |
| 6 | 0,20 | 0,80 | 1 | 0,03 | 0,015 | 0 | +2 | 38 | 4,97 |
| 7 | 0,20 | 0,80 | 1 | 0 | 0 | 0 | −3 | 12 | 4,60 |
| 8 | 0,21 (1) | 0,80 | 0,99 | 0,03 | 0,015 | 0 | +2 | 38 | 5,00 |
| 9 | 0,19 (2) | 0,80 | 1,01 | 0,03 | 0,015 | 0 | +19 | 36 | 5,05 |
| 10 | 0,25 | 0,75 | 1 | 0,03 | 0,015 | 0 | −8 | 40 | 5,06 |

En vue d'étudier l'effet de différentes combinaisons de matières premières, on a fabriqué les matériaux suivants. Le tableau 3 donne les résultats pour un certain nombre d'additions à une composition initiale (exemple 11):

$TiO_2$; 0,3 $SnO_2$; 0,7 $ZrO_2$ (2)

Tableau 3

| Exemple N° | Ajouts (en moles) | $\tau_f$ | Q · f THz | d |
|---|---|---|---|---|
| 11 | Néant | −12 | 28 | 4,92 |
| 12 | 0,03 NiO | −11 | 28 | 4,57 |
| 13 | 0,052 ZnO | −13 | 35 | 5,08 |
| 14 | 0,03 NiO + 0,052 ZnO | −15 | 41 | 5,11 |
| 15 | 0,03 NiO + 0,026 ZnO | −13 | 28 | 5,10 |
| 16 | 0,03 NiO + 0,077 ZnO | −16 | 40 | 5,07 |
| 17 | 0,03 NiO + 0,1 MgO | −20 | 47 | 5,12 |
| 18 | 0,03 NiO + 0,075 CoO | −14 | 50 | 5,08 |
| 19 | 0,06 CoO + 0,052 ZnO | −17 | 32 | 5,02 |
| 20 | 0,03 NiO + 0,015 $La_2O_3$ | −15 | 53 | 5,15 |
| 21 | 0,03 NiO + 0,15 $La_2O_3$ | +1 | 34 | 5,05 |

Figure 2, on a porté en absicisses, en échelle logarithmique, le paramètre donnant le nombre de moles d'oxyde de fer $Fe_2O_3$ dans le produit fini pour une mole de $TiO_2$. En ordonnées, on a porté le critère de qualité Q · f en térahertz pour un matériau dont la composition est donnée par le formule (2) ci-avant. Le maximum de la courbe correspond à une proportion de 0,25% en poids de fer dans le mélange initial.

Figure 3, on a représenté la variation de la fréquence de résonance, d'un échantillon de matériau de part et d'autre du point $M_0$ d'abscisse $T_0$ (25°C). On observe que le coefficient B de la formule (1) donnée plus haut est négatif et de l'ordre de $2 \cdot 10^{-5}$.

On peut encore faire les observations suivantes:

1°) Le nickel peut être incorporé à l'état pur et non en tant qu'oxyde dans les matières de départ (dans la proportion de y $Ni_2$ pour une mole $TiO_2$). Le matériau obtenu est très homogène et ses propriétés sont facilement reproductibles.

2°) L'utilisation de jarres et de billes en acier pour le broyage constitue une solution pratique et peu coûteuse. Elle permet d'éviter la pollution par l'alumine provenant de billes en corindon; la présence d'alumine ainsi introduite peut faire baisser le critère de qualité d'une dizaine de térahertz par exemple dans le cas N° 20 (tableau 3).

3°) La pollution par l'alumine du matériau en cours de frittage est également à éviter car elle peut faire descendre le critère de qualité au dessous de 20 térahertz. Ceci conduit à utiliser d'autres matériaux réfractaires, sans alumine.

4°) La suppression des étapes de chamottage et de deuxième broyage dans le cas de l'utilisation d'un outillage de broyage en acier permet une économie de moyens et aboutit à une qualité du même ordre, parfois même supérieure.

5°) Un apport de fer de 0,25% en poids, soit environ 0,4% de moles de $Fe_2O_3$ pour une mole de $TiO_2$ correspond à une excellente valeur de Q · f et à un décalage de la courbe de $\tau_f$ du côté des abscisses croissantes, figure 1. Il en résulte que pour les points d'intersection avec l'axe Ox, notamment le deuxième, on observe un produit Q · f plus grand, donc une meilleure qualité pour un coefficient de température nul (au premier ordre).

6°) L'écart stoechiométrique en $TiO_2$ affecte peu les résultats obtenus s'il est par défaut alors qu'il les affecte de façon très sensible s'il est par excès. On peut donc rechercher une excellente reproductibilité des propriétés du matériau en adoptant un léger défaut de $TiO_2$. En pratique, on observe une reproductibilité de $\tau_f$ de l'ordre de $10^{-6}$ pour une précision de $5 \cdot 10^{-3}$ sur les proportions relatives des matières premières ce qui correspond à une tolérance facile à respecter dans la pratique. On peut respecter une précision de $10^{-4}$ sur les pesées de matières premières en vue d'atteindre le point de $\tau_f$ pratiquement nul au voisinage de $x = 0,35$.

L'invention s'applique aux résonateurs diélectriques utilisés pour constituer des oscillateurs et des filtres à très haute fréquence.

**Revendications**

1. Matériau diélectrique, du type obtenu suivant la technologie de fabrication de la céramique, comportant au moins une étape de frittage en atmosphère oxydante de matières premières préalablement broyées, lesdites matières premières comprenant des constituants principaux qui sont l'oxyde de titane $TiO_2$, l'oxyde d'étain $SnO_2$ et l'oxyde de zirconium $ZrO_2$ et comprenant également des ajouts dont l'oxyde de lanthane $La_2O_3$; caractérisé en ce que lesdits ajouts comprennent également de l'oxyde de nickel NiO et du fer, les proportions molaires desdites matières premières étant les suivantes:

$$t\,TiO_2,\ x\,SnO_2,\ y\,ZrO_2,\ a\,NiO,\ b\,La_2O_3,\ c\,Fe$$

avec:

$0{,}9 \leq t \leq 1{,}1$
$0{,}1 \leq x \leq 0{,}4$
$0{,}6 \leq y \leq 0{,}8$
$0{,}015 \leq a \leq 0{,}06$
$0{,}01 \leq b \leq 0{,}1$
c de l'ordre de 0,0035

et en ce que l'atmosphère oxydante est de l'oxygène pur.

2. Matériau diélectrique selon la revendication 1, caractérisé en ce que les paramètres t, x et y satisfont les inégalités suivantes:

$0{,}99 \leq t \leq 1{,}01$
$0{,}30 \leq x \leq 0{,}38$
$0{,}60 \leq y \leq 0{,}70$

3. Matériau diélectrique selon la revendication 1, caractérisé en ce que les paramètres t, x, y, a, b et c satisfont les égalités suivantes:

$t = 1{,}003$
$x = 0{,}325$
$y = 0{,}642$
$a = 0{,}03$
$b = 0{,}015$
$c = 0{,}0035$

4. Matériau diélectrique selon la revendication 1, caractérisé en ce que les paramètres t, x, y, a, b et c satisfont les égalités suivantes:

$t = 1{,}005$
$x = 0{,}325$
$a = 0{,}03$
$b = 0{,}015$
$y = 0{,}644$
$c = 0{,}0035$

5. Matériau diélectrique selon la revendication 1, caractérisé en ce que les paramètres t, x, y, a, b et c satisfont les égalités suivantes:

$t = 1$
$x = 0{,}25$
$y = 0{,}75$
$a = 0{,}03$
$b = 0{,}015$
$c = 0{,}0035$

6. Procédé de fabrication d'un matériau diélectrique selon l'une quelconque des revendications 1 à 5, caractérisé en ce qu'il comporte au moins une étape de boryage des matières premières et une étape de frittage à une température de 1400° C à 1500° C.

7. Procédé de fabrication selon la revendication 6, caractérisé en ce que le fer est introduit au cours de l'étape de broyage en utilisant un outillage de broyage en acier.

8. Procédé de fabrication selon la revendication 7, caractérisé en ce que l'étape de broyage est

effectuée en utilisant des billes d'acier de 3 mm de diamètre pendant une durée de vingt minutes.

9. Procédé de fabrication selon la revendication 7, caractérisé en ce que l'étape de frittage est effectuée en six heures, à une température de 1450° C.

10. Procédé de fabrication selon l'une quelconque des revendications 6 à 9, caractérisé en ce que, lors des mesures pondérales desdites matières premières, l'oxyde de titane $TiO_2$ est pesé par défaut.

## Patentansprüche

1. Dielektrisches Material von der Art, wie es gemäß der Technologie der Herstellung einer Keramik erhalten wird, umfassend mindestens eine Stufe des Sinterns von vorher fein vermahlenen Ausgangsmaterialien in oxidierender Atmosphäre, wobei diese Ausgangsmaterialien als Hauptbestandteile Titanoxid ($TiO_2$), Zinnoxid ($SnO_2$) und Zirkoniumoxid ($ZrO_2$) und außerdem Zusätze wie Lanthanoxid ($La_2O_3$) enthalten, dadurch gekennzeichnet, daß die Zusätze außerdem Nickeloxid (NiO) und Eisen umfassen, daß die molaren Anteile der Ausgangsmaterialien die folgenden sind:

$t\,TiO_2$, $x\,SnO_2$, $Y\,ZrO_2$, $a\,NiO$, $b\,La_2O_3$, $c\,Fe$

mit

$0{,}9 \leq t \leq 1{,}1$
$0{,}1 \leq x \leq 0{,}4$
$0{,}6 \leq y \leq 0{,}9$
$0{,}015 \leq a \leq 0{,}06$
$0{,}01 \leq b \leq 0{,}1$
c etwa 0,0035

sowie dadurch, daß die oxidierende Atmosphäre aus reinem Sauerstoff besteht.

2. Dielektrisches Material nach Anspruch 1, dadurch gekennzeichnet, daß die Parameter t, x und y den folgenden Ungleichungen gehorchen:

$0{,}99 \leq t \leq 1{,}01$
$0{,}30 \leq x \leq 0{,}38$
$0{,}60 \leq y \leq 0{,}70$

3. Dielektrisches Material nach Anspruch 1, dadurch gekennzeichnet, daß die Parameter t, x, y, a, b und c den folgenden Gleichungen gehorchen:

$t = 1{,}003$
$x = 0{,}325$
$y = 0{,}642$
$a = 0{,}03$
$b = 0{,}015$
$c = 0{,}0035$

4. Dielektrisches Material nach Anspruch 1, dadurch gekennzeichnet, daß die Parameter t, x, y, a, b und c den folgenden Gleichungen gehorchen:

$t = 1{,}005$
$x = 0{,}325$
$y = 0{,}644$
$a = 0{,}03$
$b = 0{,}015$
$c = 0{,}0035$

5. Dielektrisches Material nach Anspruch 1, dadurch gekennzeichnet, daß die Parameter t, x, y, a, b und c den folgenden Gleichungen gehorchen:

$t = 1$
$x = 0{,}25$
$y = 0{,}75$
$a = 0{,}03$
$b = 0{,}015$
$c = 0{,}0035$

6. Verfahren zur Herstellung eines dielektrischen Materials gemäß einem der Ansprüche 1 bis 5, dadurch gekennzeichnet, daß es mindestens eine Stufe des Vermahlens der Ausgangsmaterialien und eine Stufe des Sinterns bei einer Temperatur von 1400 bis 1500° C umfaßt.

7. Verfahren nach Anspruch 6, dadurch gekennzeichnet, daß das Eisen im Verlaufe der Stufe des Vermahlens durch Verwendung einer Stahlmühle eingeführt wird.

8. Verfahren nach Anspruch 7, dadurch gekennzeichnet, daß die Stufe des Vermahlens unter Verwendung von Stahlkugeln mit einem Durchmesser von 3 mm während einer Dauer von 20 Minuten durchgeführt wird.

9. Verfahren nach Anspruch 7, dadurch gekennzeichnet, daß die Stufe des Sinterns während 6 Stunden bei einer Temperatur von 1450° C durchgeführt wird.

10. Verfahren nach einem der Ansprüche 6 bis 9, dadurch gekennzeichnet, daß das Titanoxid ($TiO_2$) beim Abwiegen der Ausgangsmaterialien im Unterschuß eingewogen wird.

## Claims

1. Dielectric material of the type as being obtained according to the technology of manufacturing ceramics, comprising at least one step of sintering, in an oxidizing atmosphere, preliminary ground starting materials with said starting materials comprising, as main constituents, titanium oxide ($TiO_2$), tin oxide ($SnO_2$), and zirconium oxide ($ZrO_2$), and also comprising additives such as lanthanum oxide ($La_2O_3$), characterized in that said additives are also comprising nickel oxide (NiO) and iron with the molar proportions of said starting materials being the following ones:

$$t\,TiO_2,\ x\,SnO_2,\ y\,ZrO_2,\ a\,NiO,\ b\,La_2O_3,\ c\,Fe$$

with

$0.9 \leqq t \leqq 1.1$
$0.1 \leqq x \leqq 0.4$
$0.6 \leqq y \leqq 0.9$
$0.015 \leqq a \leqq 0.06$
$0.01 \leqq b \leqq 0.1$
c of the order of 0.0035

and in that said oxydizing atmosphere is pure oxygen.

2. Dielectric material according to claim 1, characterized in that the parameters t, x, and y satisfy the following inequations:

$0.99 \leqq t \leqq 1.01$
$0.30 \leqq x \leqq 0.38$
$0.60 \leqq y \leqq 0.70$

3. Dielectric material according to claim 1, characterized in that the parameters t, x, y, a, b, and c satisfy the following equations:

$t = 1.003$
$x = 0.325$
$y = 0.642$
$a = 0.03$
$b = 0.015$
$c = 0.0035$

4. Dielectric material according to claim 1, characterized in that the parameters t, x, y, a, b, and c satisfy the following equations:

$t = 1.005$
$x = 0.325$
$y = 0.644$
$a = 0.03$
$b = 0.015$
$c = 0.0035$

5. Dielectric material according to claim 1, characterized in that the parameters t, x, y, a, b, and c satisfy the following equations:

t = 1
x = 0.25
y = 0.75
a = 0.03
b = 0.015
c = 0.0035

6. Process for the manufacture of the dielectric material of any one of the claims 1 to 5, characterized in that it comprises at least one step of grinding of starting materials and one step of sintering at a temperature of from 1400° C to 1500° C.

7. Process according to claim 6, characterized in that the iron is introduced in the course of the step of grinding by use of a grinding arrangement made of steel.

8. Process according to claim 7, characterized in that the step of grinding is effected by using steel balls having a diameter of 3 mm during a period of twenty minutes.

9. Process according to claim 7, characterized in that the step of sintering is effected during 6 hours at a temperature of 1450° C.

10. Process according to any one of the claims 6 to 9, characterized in that the titanium oxide ($TiO_2$) is weighed with deficiency in weight when weighing said starting materials.

FIG.1

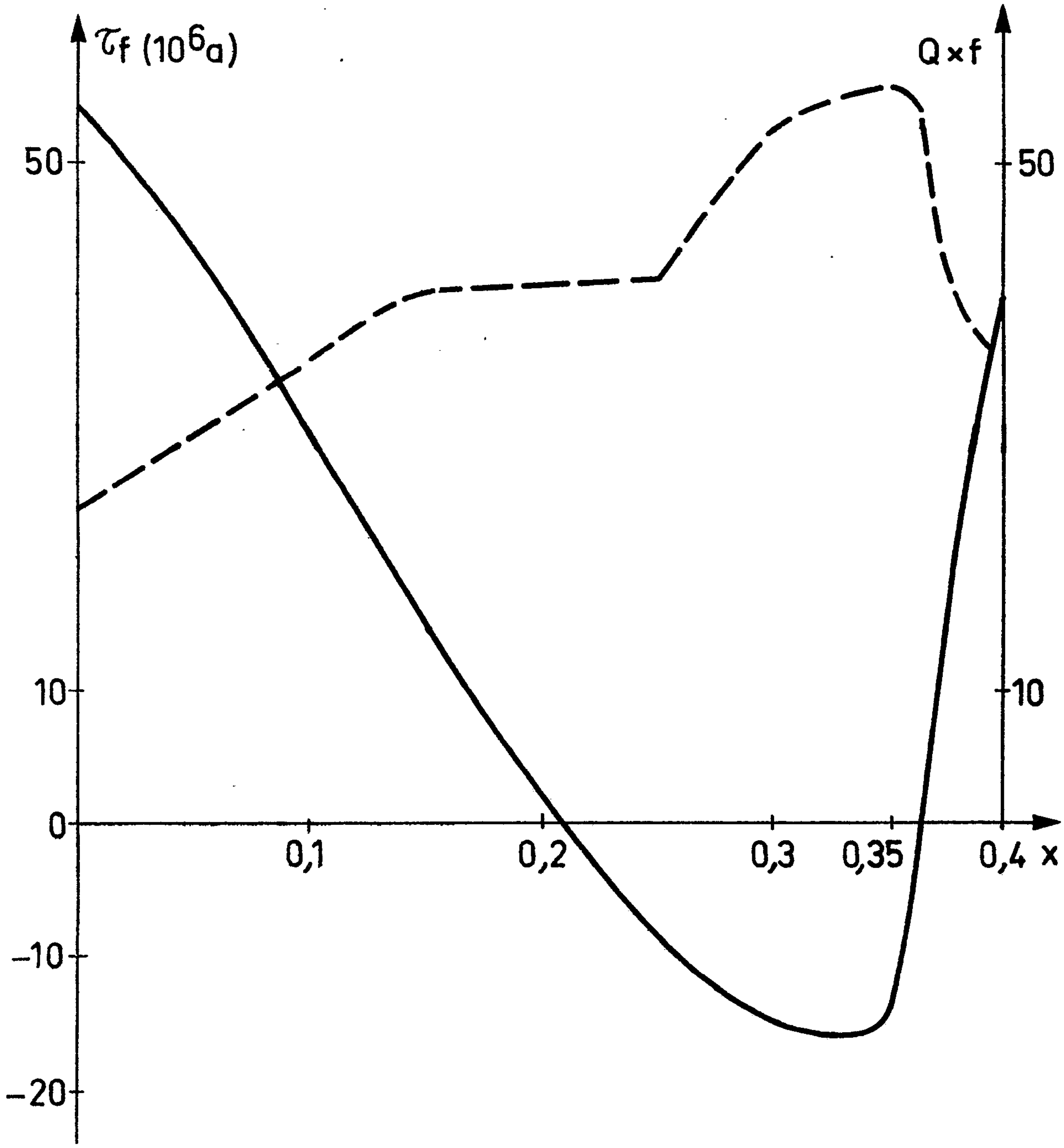

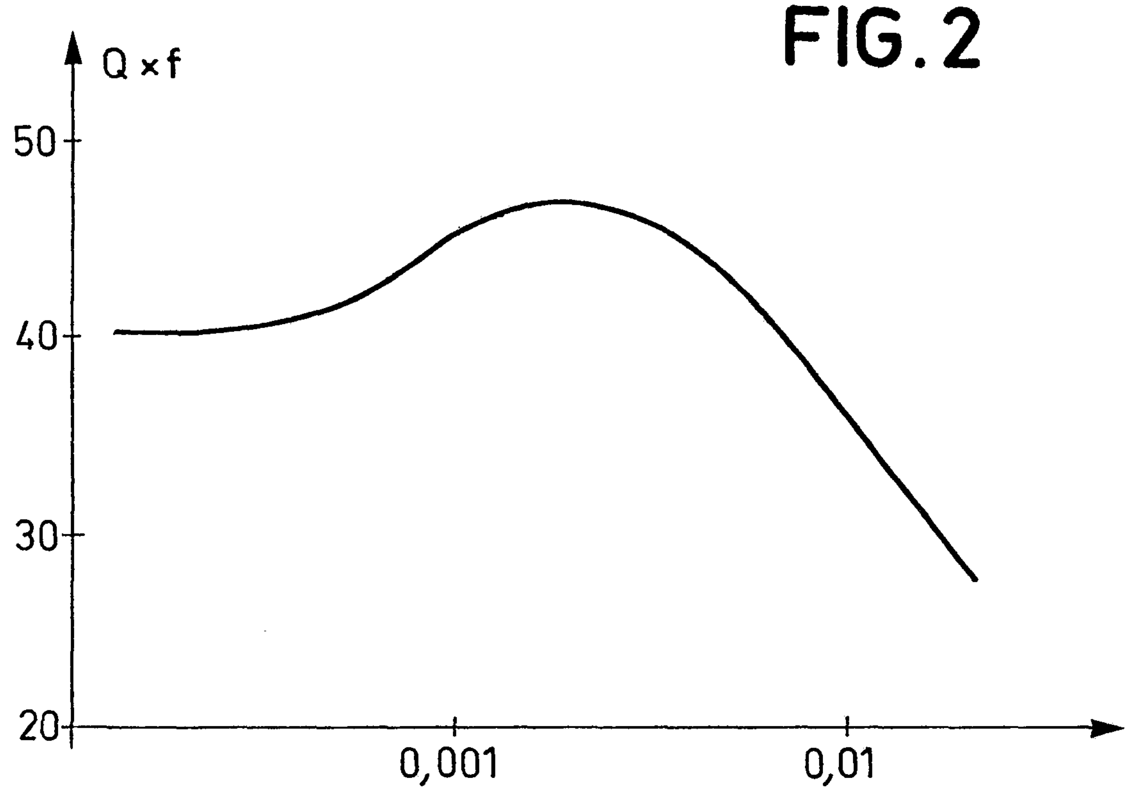


FIG. 2

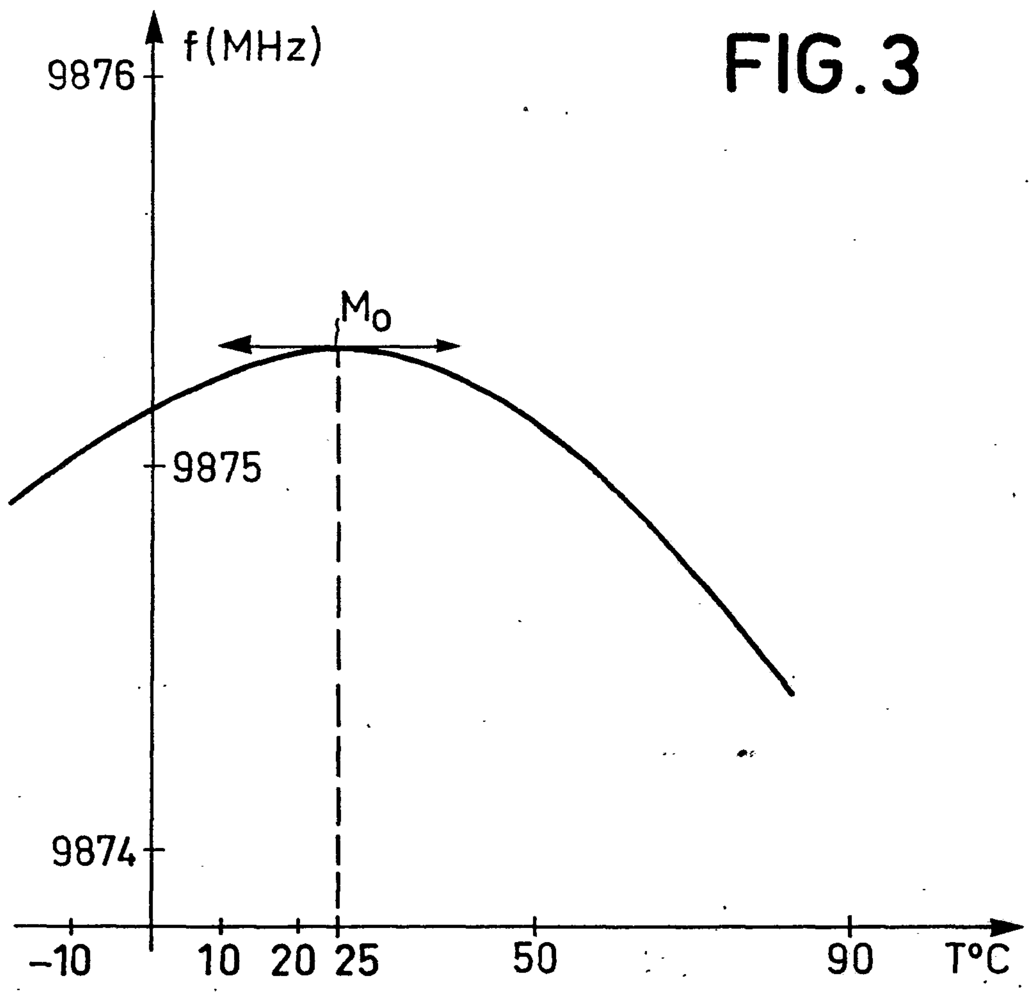


FIG. 3